# EUROPÄISCHE PATENTANMELDUNG

(11) **EP 4 778 740 A1**
(43) Veröffentlichungstag der Anmeldung: **22.07.2026**
(21) Anmeldenummer: 26151538.1
(22) Anmeldetag: 13.01.2026
(51) Int. Cl.: B60C 1/00, B60C 9/00, B60C 9/12, B60C 9/20, B60C 19/08

(54) **FAHRZEUGREIFEN UND VERFAHREN ZUM AUFBAUEN EINES GÜRTEL-LAUFSTREIFEN-PAKETS**

(30) Priorität: 21.01.2025 DE 102025101932
(71) Anmelder: Continental Reifen Deutschland GmbH, 30175 Hannover (DE)
(72) Erfinder: Özüduru, Ahmet, 30175 Hannover (DE); Krystofiak, Thomas, 30175 Hannover (DE)
(74) Vertreter: Continental Corporation

(57) **Zusammenfassung**

Die Erfindung betrifft Fahrzeugreifen mit einem eine Bodenaufstandsfläche aufweisenden Laufstreifen (1) und einem Gürtelverband (2) mit zumindest zwei Gürtellagen (2a, 2b) jeweils aus in einer elektrisch nicht leitenden Gürtelgummierung eingebetteten Stahlfestigkeitsträgern (2c) mit einem in radialer Richtung an ihrer dicksten Stelle ermittelten Durchmesser (d₁), wobei der Fahrzeugreifen einen Ableitweg zur Ableitung elektrostatischer Aufladungen zur Laufstreifenaußenfläche (1a) aufweist, welcher den Laufstreifen oder ein den Laufstreifen (1) zur Bodenaufstandsfläche durchsetzendes elektrisch leitendes Laufstreifenelement (1e) und jeweils eine elektrisch leitende Gürtel-Felgen-Verbindung (4, 7) umfasst, welche bei auf der Felge montierten Fahrzeugreifen die Felge kontaktiert.

Der Gürtelverband (2) weist zumindest einen mittleren, in Richtung Reifeninnenraum muldenförmig geformten, in radialer Richtung verjüngten Gürtelabschnitt (2₁) auf, welcher aus in radialer Richtung verjüngten Lagenabschnitten (2a₁, 2b₁) der Gürtellagen (2a, 2b) gebildet ist, wobei der Laufstreifen bzw. das Laufstreifenelement (1e) jeweils mit der elektrisch leitenden Gürtel-Felgen-Verbindung (4, 7) über den verjüngten Gürtelabschnitt (2₁) elektrisch leitend miteinander verbunden sind.

## Beschreibung

Die Erfindung betrifft einen Fahrzeugreifen mit einem eine Bodenaufstandsfläche aufweisenden Laufstreifen und einem Gürtelverband mit zumindest zwei Gürtellagen jeweils aus in einer elektrisch nicht leitenden Gürtelgummierung eingebetteten Stahlfestigkeitsträgern mit einem in radialer Richtung an ihrer dicksten Stelle ermittelten Durchmesser und gegebenenfalls mit einer Gürtelbandage, wobei der Fahrzeugreifen einen Ableitweg zur Ableitung elektrostatischer Aufladungen zur Laufstreifenaußenfläche aufweist, welcher den Laufstreifen oder ein den Laufstreifen zur Bodenaufstandsfläche durchsetzendes elektrisch leitendes Laufstreifenelement und jeweils eine elektrisch leitende Gürtel-Felgen-Verbindung umfasst, welche bei auf der Felge montierten Fahrzeugreifen die Felge kontaktiert, wobei unter einem elektrisch leitenden Bestandteil des Reifens, beispielsweise dem elektrisch leitenden Laufstreifenelement und einer elektrisch leitenden Verbindung, ein solcher bzw. ein solches bzw. eine solche verstanden wird, welcher bzw. welche bzw. welches einen spezifischen elektrischen Widerstand von ≤ 10⁸ Ohm cm aufweist.

Die Erfindung betrifft ferner ein Verfahren zum Aufbauen eines Gürtel-Laufstreifen-Pakets.

Ein Fahrzeugreifen der eingangs genannten Art ist beispielsweise aus der DE 10 2022 203 216 A1 bekannt. Dieser Fahrzeugreifen weist einen Gürtelverband mit Gürtellagen mit in einer elektrisch nicht leitenden Gürtelgummierung eingebetteten Stahl- oder Textilkorden, eine Gürtelbandage, Seitenwände aus elektrisch nicht leitendem Gummimaterial, einen Laufstreifen mit einem durchsetzenden, elektrisch leitenden Laufstreifenelement und eine elektrisch leitende Seitenwandpassage auf. Das elektrisch leitende Laufstreifenelement und die elektrisch leitende Seitenwandpassage sind durch eine elektrische leitende Gürtelpassage mit zumindest einen elektrisch leitenden Faden verbunden. Der elektrisch leitende Faden weist einen zwischen der Karkasseinlage und der radial innersten Gürtellage verlaufenden Fadenabschnitt und einen an diesen anschließenden, zwischen dem Laufstreifen und der radial äußersten Gürtellage sowie gemeinsam mit der Gürtelbandage über die Gürtelkanten verlaufenden, radial äußeren Fadenabschnitt auf. Der Reifen soll unter Aufrechterhaltung eines Ableitwegs einen geringen Rollwiderstand aufweisen.

Aus der DE 10 2015 225 149 A1 ist ferner ein Fahrzeugreifen mit einen Laufstreifen, einen Gürtelverband und einer als Spulbandage ausgeführten Gürtelbandage bekannt. Die Gürtellagen des Gürtelverbands weisen eine elektrisch leitende Gürtelgummierung auf. Die Gürtelbandage weist eine elektrisch nicht leitende Bandagegummierung auf. Durch die Gürtelbandage ist eine elektrisch leitende Materialpassage durchgeführt, welche ein elektrisch leitendes Laufstreifenelement mit der radial äußersten Gürtellage verbindet, wobei die elektrisch leitende Materialpassage beispielsweise ein elektrisch leitender Gummistreifen, eine aufgesprühte oder aufgestrichene eklektische leitende Paste oder Sprühlösung oder ein elektrisch leitendes Pulver oder Granulat ist. Der Reifen soll einen geringen Rollwiderstand aufweisen.

Zur Bildung eines für die Ableitung elektrostatischer Aufladungen erforderlichen Ableitwegs ist es daher einerseits bekannt, die Gürtelgummierung elektrisch nicht leitend zu gestalten und den Ableitweg an der Außenseite des Gürtelverbands um diesem herum zu führen. Die Gürtelgummierung ist daher im Hinblick auf den Rollwiderstand des Reifens günstig ausgelegt. Allerdings sind entsprechend weitere Bestandteile erforderlich, um den Ableitweg sicherzustellen, sodass beim Reifenaufbau diese Bestandteile verbaut werden müssen und sich der Reifenaufbau etwas komplexer gestaltet. Die weiteren Reifenbauteile können je nach Ausgestaltung wiederum zum Rollwiderstand beitragen.

Andererseits ist es bekannt, den Gürtelverband durch eine elektrisch leitende Gürtelgummierung als integralen Bestandteil des Ableitwegs auszuführen. Der Reifenaufbau lässt sich dadurch etwas einfach gestalten, jedoch trägt ein solcher Gürtelverband auch deutlicher zum Rollwiderstand bei.

Der Erfindung liegt daher die Aufgabe zugrunde, unter Aufrechterhaltung eines zuverlässigen Ableitwegs einen möglichst einfach aufzubauenden und im Hinblick auf den Rollwiderstand günstigen Reifen der eingangs genannten Art zur Verfügung zu stellen.

Gelöst wird die gestellte Aufgabe erfindungsgemäß einerseits durch einen Fahrzeugreifen, bei welchem der Gürtelverband zumindest einen mittleren, in Richtung Reifeninnenraum muldenförmig geformten und gegenüber dem sonstigen Gürtelverband in radialer Richtung verjüngten Gürtelabschnitt aufweist, welcher aus in radialer Richtung übereinander angeordneten, in radialer Richtung verjüngten Lagenabschnitten der Gürtellagen gebildet ist, wobei die verjüngten Lagenabschnitte an ihrer bzw. ihren schmälsten Stelle(n) in radialer Richtung jeweils eine Stärke aufweisen, welche höchstens 0,70 mm größer ist als der in radialer Richtung ermittelte Durchmesser des in dieser Gürtellage enthaltenen Stahlfestigkeitsträgers, wobei der zum Ableitweg gehörende Laufstreifen bzw. das zum Ableitweg gehörende elektrisch leitende Laufstreifenelement jeweils mit der elektrisch leitenden Gürtel-Felgen-Verbindung über den verjüngten Gürtelabschnitt elektrisch leitend miteinander verbunden sind.

Der erfindungsgemäße Fahrzeugreifen zeichnet sich durch einen spezifisch verjüngten Gürtelabschnitt aus, bei welchen die elektrisch nicht leitende Gürtelgummierung derart ausgedünnt ist, dass die elektrische Leitung von den in den zugehörigen, verjüngten Lagenabschnitten verlaufenden Stahlfestigkeitsträgern übernommen wird. Dadurch lässt sich der Ableitweg einfacher ausführen, ist also im Hinblick auf die erforderlichen Ableitwegabschnitte weniger komplex, sodass sich der korrespondierende Rohreifen einfacher aufbauen lässt und der vulkanisierte Reifen einen geringen Rollwiderstand aufweist.

Gelöst wird die gestellte Aufgabe erfindungsgemäß ferner durch ein Verfahren zum Aufbauen eines Gürtel-Laufstreifen-Pakets zur Bildung eines Rohreifens mit folgenden nacheinander ablaufenden Schritten:
a) Aufwickeln einer ersten Festigkeitsträgerlage aus in einer Kautschukmischung eingebetteten Stahlfestigkeitsträgern auf einer Gürtelaufbautrommel,
b) Aufwickeln einer zweiten Festigkeitsträgerlage aus in einer Kautschukmischung eingebetteten Stahlfestigkeitsträgern,
c) Lokales muldenförmiges Verformen unter Verjüngen der aufgewickelten Festigkeitsträgerlagen
   c1) entweder durch Beaufschlagen mit einer frei drehbar gelagerten Rolle mit einer in Richtung Trommelachse der Gürtelaufbautrommel gerichteten Kraft von zumindest 20 N und unter Aufrechterhaltung der Kraft Rotation der Gürtelaufbautrommel um ihre Trommelachse um zumindest eine komplette Umdrehung
   c2) oder durch Aufwickeln eines unter einer Zugkraft von zumindest 20 N stehenden Festigkeitsträgerstreifens aus in einer Kautschukmischung eingebetteten textilen Festigkeitsträgern,
d) Aufwickeln eines Rohlaufstreifens auf die Festigkeitsträgerlagen und den gegebenenfalls aufgewickelten Festigkeitsträgerstreifen und derart Bilden des Gürtel-Laufstreifen-Pakets.

Wie die Verfahrensschritte darlegen, lässt sich der korrespondierende Rohreifen auf einfache Weise aufbauen, insbesondere über den Schritt c2), durch welchen gleichzeitig eine Gürtelbandage aufgebaut wird.

Im Zuge des Verfahrens kann im Rahmen von Schritt c) eine Verformung der betreffenden Stahlfestigkeitsträgern auftreten. In der Folge können jene Stahlfestigkeitsträger, welche sich im Fahrzeugreifen in den verjüngten Lagenabschnitten befinden, in radialer Richtung verformt ("gestaucht") sein. Die an der bzw. den schmälsten Stelle(n) in radialer Richtung ermittelte Stärke der verjüngten Lagenabschnitte bezieht sich bei verformten Stahlfestigkeitsträgern auf den Durchmesser des bzw. der in radialer Richtung am stärksten verformten (gestauchten), im Bereich des verjüngten Gürtelabschnitts befindlichen Stahlfestigkeitsträger(s).

Nachfolgend wird auf bevorzugte, miteinander kombinierbare Ausführungen und zugehörige bevorzugte Varianten des Fahrzeugreifens eingegangen.

Gemäß einer bevorzugten Ausführung ist die Stärke der verjüngten Lagenabschnitte, welche an der bzw. den schmälsten Stelle(n) vorliegt, 0,10 mm bis 0,50 mm größer ist als der Durchmesser des in dieser Gürtellage enthaltenen Stahlfestigkeitsträgers. Dies trägt zu einer zusätzlichen Erhöhung der Leitfähigkeit der Lagenabschnitte bei.

Die nachfolgenden zwei weiteren bevorzugten Ausführungen sind zusätzlich für die Leitfähigkeit der Lagenabschnitte vorteilhaft.

Gemäß der ersten diesbezüglichen bevorzugten Ausführung beträgt die Stärke der verjüngten Lagenabschnitte, welche an der bzw. den schmälsten Stelle(n) vorliegt, höchstens 90%, insbesondere höchstens 80%, bevorzugt höchstens 70%, der in radialer Richtung an der bzw. den schmälsten Stelle(n) ermittelten Stärke der zugehörigen Gürtellage im Bereich außerhalb des verjüngten Lagenabschnitts.

Gemäß der zweiten diesbezüglichen bevorzugten Ausführung ist vorgesehen, dass die verjüngten Lagenabschnitte, im Reifenquerschnitt betrachtet, in axialer Richtung eine Breite von 5,0 mm bis 50,0 mm, insbesondere von 10,0 mm bis 40,0 mm, bevorzugt von 15,0 mm bis 30,0 mm, aufweisen, wobei die Stärke der verjüngten Lagenabschnitte, welche an der bzw. den schmälsten Stelle(n) vorliegt, fortlaufend insbesondere über zumindest 50%, bevorzugt über zumindest 75%, der Breite der verjüngten Lagenabschnitte vorliegt und wobei die Stärke der Lagenabschnitte über deren Endabschnitte zur Stärke, welche die zugehörige Gürtellage in radialer Richtung an der bzw. den schmälsten Stelle(n) im Bereich außerhalb des verjüngten Lagenabschnitts aufweist, fortlaufend zunimmt.

Für die Reifengleichförmigkeit ist es insbesondere günstig, wenn die verjüngten Lagenabschnitte, im Reifenquerschnitt betrachtet, die Reifenäquatorialebene queren und bevorzugt symmetrisch zur Reifenäquatorialebene ausgebildet sind.

Für die Ableiteigenschaften ist es ferner vorteilhaft, wenn der Durchmesser der Stahlfestigkeitsträger 0,3 mm bis 1,5 mm beträgt.

Bevorzugter Weise verlaufen die verjüngten Lagenabschnitte über den kompletten Reifenumfang.

Gemäß einer ersten vorteilhaften Ausführungsalternative kontaktieren die verjüngten Lagenabschnitte der Gürtellagen einander über ihre komplette Umfangserstreckung.

Gemäß einer zweiten vorteilhaften Ausführungsalternative ist vorgesehen, dass zwischen dem verjüngten Lagenabschnitt der einen Gürtellage und dem verjüngten Lagenabschnitt der anderen Gürtellage zumindest ein elektrisch leitender Gummistreifen, vorzugsweise ein einziger über die komplette Umfangserstreckung der verjüngten Lagenabschnitte verlaufender, elektrisch leitender Gummistreifen verbaut ist, welcher, im Reifenquerschnitt betrachtet, in radialer Richtung eine Stärke von 0,50 mm bis 1,00 mm aufweist. Ein solcher Gummistreifen trägt zu einer Verbesserung der Ableiteigenschaften der verjüngten Lagenabschnitte bei.

In diesem Zusammenhang ist es ferner vorteilhaft, wenn der elektrisch leitende Gummistreifen in axialer Richtung eine Breite von 50% bis 100%, insbesondere von höchstens 75%, der Breite des verjüngten Gürtelabschnitts aufweist.

Ferner ist es in diesem Zusammenhang vorteilhaft, wenn der elektrisch leitende Gummistreifen bei jedem verjüngten Lagenabschnitt in die Bereiche zwischen benachbarte Stahlfestigkeitsträger hineinragt und die Stahlfestigkeitsträger vorzugsweise kontaktiert.

Anschließend wird auf bevorzugte Ausführungen des Verfahrens eingegangen.

Es ist von Vorteil, wenn in Schritt c) die Kraft 30 N bis 100 N, bevorzugt bis zu 90 N, besonders bevorzugt 40 N bis 80 N, beträgt.

Ferner ist es günstig, wenn in Schritt c) genau eine komplette Umdrehung durchgeführt wird.

Gemäß einer weiteren bevorzugten Ausführung wird zwischen Schritt a) und Schritt b) auf die erste Festigkeitsträgerlage, insbesondere mittig, ein abgelängter Kautschukmischungsstreifen mit einer Stärke von insbesondere 0,50 mm bis 1,00 mm zur Bildung eines elektrisch leitenden Gummistreifens aufgewickelt. Ein solcher Kautschukmischungsstreifen bildet im fertigen Reifen den für die Ableiteigenschaften vorteilhaften Gummistreifen.

Weitere Merkmale, Vorteile und Einzelheiten der Erfindung werden nun anhand der Zeichnung, die schematisch Ausführungsbeispiele der Erfindung darstellt, näher beschrieben. Dabei zeigen
Fig. 1 eine Hälfte eines Querschnitts einen Fahrzeugluftreifens mit einer ersten Ausführungsform der Erfindung,
Fig. 2 eine vergrößerte, detailliertere Ansicht des Details Z₂ der Fig. 1,
Fig. 3 eine zu Fig. 2 analoge Ansicht mit einer zweiten Ausführungsvariante der Erfindung und
Fig. 4 eine schematischen Teilquerschnitt im Bereich einer Gürtelaufbautrommel.

Die Erfindung befasst sich mit einem Fahrzugreifen mit einem spezifisch ausgeführten Gürtelverband und einem Verfahren zum Aufbauen eines Gürtel-Laufstreifen-Pakets für einen mit dem Fahrzeugreifen korrespondierenden Rohreifen. "Korrespondierend" bedeutet, dass aus dem Rohreifen durch Vulkanisation der Fahrzeugreifen erhalten wird.

Gemäß der Erfindung ausgeführte Fahrzeugreifen sind Reifen für Kraftfahrzeuge in Radialbauart, insbesondere für mehrspurige Kraftfahrzeuge, bevorzugt für Personenkraftwagen (PKWs), Vans (Transporter) oder SUVs, sowie vorzugsweise Fahrzeugluftreifen. PKW-, Van- und SUV-Reifen sind insbesondere für Felgen mit einem ganzzahligen Felgendurchmesser von 13 Zoll bis 24 Zoll, bevorzugt von 18 Zoll bis 23 Zoll, vorgesehen und weisen einen Traglastindex von insbesondere 71 bis 126 auf.

### 1. Erstes Ausführungsbeispiel eines Fahrzeugluftreifens

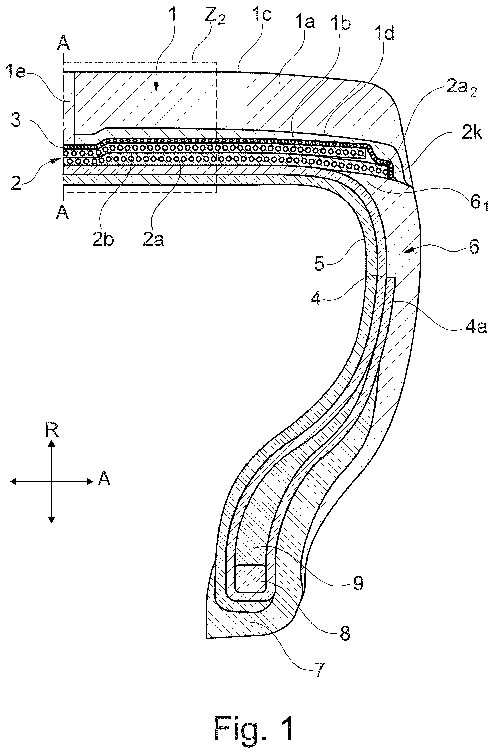

Fig. 1 zeigt eine Hälfte eines Querschnitts eines Fahrzeugluftreifens, welcher ein PKW-Reifen ist. Die radiale Richtung ist durch einen Doppelpfeil R, die axiale Richtung ist durch einen Doppelpfeil A und die Reifenäquatorialebene ist durch eine Linie A-A angedeutet. Unter der "axialen Richtung" wird die Richtung parallel zur Reifenachse, also die im Reifenquerschnitt senkrecht zur Reifenäquatorialebene verlaufende Richtung verstanden. Die "radialen Richtung" bezeichnet die im in axialer Richtung ausgerichteten Querschnitt (Reifenquerschnitt) parallel zur Reifenäquatorialebene verlaufende Richtung. Die nicht gezeigte Hälfte des Fahrzeugluftreifens ist vorzugsweise übereinstimmend zur gezeigten Hälfte ausgeführt.

Der Fahrzeugluftreifen weist einen profilierten Laufstreifen 1, einen zweilagigen Gürtelverband 2, eine Gürtelbandage 3, eine einlagige Karkasseinlage 4, eine luftdichte Innenschicht 5 und in jeder Reifenhälfte je eine Seitenwand 6, ein Hornprofil 7, einen Wulstkern 8 und ein Kernprofil 9 auf.

Die Karkasseinlage 4 verläuft in an sich bekannter Weise zwischen dem Gürtelverband 2 und der Innenschicht 5 sowie zwischen den Seitenwänden 6 und der Innenschicht 5 und ist um die Wulstkerne 8 von innen nach außen Karkasshochschläge 4a bildend umgeschlagen. Die Karkasseinlage 4 besteht aus einer elektrisch leitenden Karkassgummierung und in dieser eingebetteten Festigkeitsträgern.

Der Laufstreifen 1 ist beim gezeigten Ausführungsbeispiel in radialer Richtung zweischichtig aufgebaut, setzt sich aus einer die in Fig. 1 nicht gezeigte Profilierung enthaltenden, radial äußeren Laufstreifenschicht 1a, die üblicherweise als Laufstreifencap bezeichnet wird, und einer radial inneren Laufstreifenschicht 1b, die üblicherweise als Laufstreifenbase bezeichnet wird, zusammen und weist eine Laufstreifenaußenfläche 1c und eine Laufstreifeninnenseite 1d auf. Die radial äußere Laufstreifenschicht 1a und die radial innere Laufstreifenschicht 1b bestehen jeweils aus einem elektrisch nicht leitenden Gummimaterial und sind im Bereich der Bodenaufstandsfläche (Ermittlung gemäß ETRTO-Standards in der aktuell geltenden Fassung: Auf zugeordneter Normfelge montierter Reifen, Last gemäß 50% "load capacity per axle (kg), single" und zugehörigem Luftdruck ("inflation pressure (kPa")), beim Ausführungsbeispiel im Bereich der Reifenäquatorialebene (Linie A-A), von zumindest einem zwischen der Laufstreifenaußenfläche 1c und der Laufstreifeninnenseite 1d verlaufenden, elektrisch leitenden Laufstreifenelement 1e in radialer Richtung durchsetzt. Das bzw. die elektrisch leitende(n) Laufstreifenelement(e) 1e kontaktiert bzw. kontaktieren somit die Gürtelbandage 3. Insbesondere ist ein einziges Laufstreifenelement 1e in Form eines in Umfangsrichtung umlaufenden, elektrisch leitenden Gummistreifens vorgesehen. Sind mehrere elektrisch leitende Laufstreifenelementen 1e vorhanden, sind diese derart über den Reifenumfang verteilt angeordnet, dass sich beim Abrollen des Reifens jeweils zumindest eines der Laufstreifenelemente 1e in der Bodenaufstandsfläche befindet.

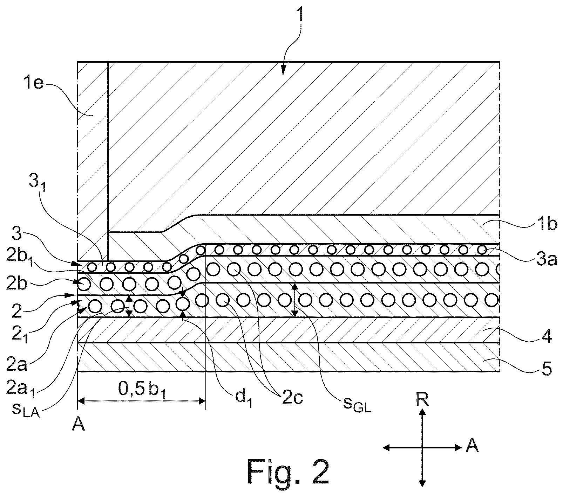

Der Gürtelverband 2 weist eine radial innere Gürtellage 2a und eine radial äußere Gürtellage 2b auf, wobei die Gürtellagen 2a, 2b je zwei Gürtelkanten 2k aufweisen und jeweils aus in einer elektrisch nicht leitenden Gürtelgummierung eingebetteten, in jeder Gürtellage 2a, 2b parallel zueinander sowie zur Umfangsrichtung unter einem Winkel von insbesondere 15° bis 45° verlaufenden, elektrisch leitenden Stahlfestigkeitsträgern 2c (Fig. 2), also Stahlfilamenten oder Stahlkorden bekannter Konstruktion, bestehen, wobei die Stahlfestigkeitsträger 2c der radial inneren Gürtellage 2a jene der radial äußeren Gürtellage 2b in insbesondere bekannter Weise kreuzen. Gemäß Fig. 2 weisen die Stahlfestigkeitsträger 2c jeweils einen in radialer Richtung an ihrer dicksten Stelle ermittelten Durchmesser d₁ von vorzugsweise 0,3 mm bis 1,2 mm auf. Die radial innere Gürtellage 2a weist, im Querschnitt betrachtet, die Karkasseinlage 4 seitlich überragende, diese daher nicht kontaktierende Randabschnitte 2a₂ auf (Fig. 1).

Gemäß Fig. 2 weist der Gürtelverband 2, im Reifenquerschnitt betrachtet, radial innerhalb des elektrisch leitenden Laufstreifenelements 1e bzw. der elektrisch leitenden Laufstreifenelemente 1e einen in Umfangsrichtung umlaufenden, mittleren, in Richtung Reifeninnenraum, also in Richtung Karkasseinlage 4 und Innenschicht 5, muldenförmig geformten, in radialer Richtung verjüngten Gürtelabschnitt 2₁ auf, welcher aus zwei aufeinanderliegenden, entsprechend muldenförmig geformten, in radialer Richtung verjüngten Lagenabschnitten 2a₁ (radial innere Gürtellage 2a), 2b₁ (radial äußere Gürtellage 2b) gebildet ist und das bzw. jedes elektrisch leitende Laufstreifenelement 1e in den axialen Richtungen (Doppelpfeil A) überragt. Jede Gürtellage 2a, 2b weist, im Reifenquerschnitt betrachtet, im Bereich außerhalb ihres verjüngten Lagenabschnitts 2a₁, 2b₁ in radialer Richtung an ihrer bzw. ihren schmälsten Stelle(n) eine Stärke s_{GL} (nur bei Gürtellage 2a vermerkt) auf. Jeder verjüngte Lagenabschnitt 2a₁, 2b₁ weist, im Reifenquerschnitt betrachtet und entsprechend der Verjüngung, in radialer Richtung an seiner bzw. seinen schmälsten Stelle(n) eine Stärke s_{LA} (nur bei Gürtellage 2a vermerkt) auf, welche kleiner ist als die Stärke s_{GL} der zugehörigen Gürtellage 2a, 2b, wobei die Stärke s_{LA} höchstens 0,70 mm, insbesondere 0,10 mm bis 0,50 mm, größer ist als der Durchmesser d₁ der enthaltenen Stahlfestigkeitsträger 2c. Wie noch genauer erläutert wird, können die Stahlfestigkeitsträger 2c im Bereich des verjüngten Gürtelabschnitts 2₁ - bedingt durch den Reifenaufbau (siehe Punkt 3) - geringfügig verformt (deformiert) sein, sodass genau diese Stahlfestigkeitsträger 2c keinen "runden" Querschnitt aufweisen. Bei verformten Stahlfestigkeitsträgern 2c bezieht sich die Stärke s_{LA} auf den Durchmesser d₁ jenes bzw. jener im Bereich des jeweiligen verjüngten Lagenabschnitts 2a₁, 2b₁ befindlichen Stahlfestigkeitsträger(s) 2c, welcher bzw. welche am stärksten verformt (gestaucht) ist bzw. sind und daher den kleinsten Durchmesser d₁ sämtlicher verformten Stahlfestigkeitsträgern 2c aufweist bzw. aufweisen. Bevorzugt beträgt die Stärke s_{LA} jedes verjüngten Lagenabschnitts 2a₁, 2b₁ zusätzlich höchstens 90%, insbesondere höchstens 80%, bevorzugt höchstens 70%, der Stärke s_{GL} der zugehörigen Gürtellage 2a, 2b.

Ferner weist jeder verjüngte Lagenabschnitt 2a₁, 2b₁, im Reifenquerschnitt betrachtet, in axialer Richtung eine Breite b₁ (in Fig. 2 sind 0,5 x b₁ zu sehen) von 5,0 mm bis 50,0 mm, insbesondere von 10,0 mm bis 40,0 mm, bevorzugt von 15,0 mm bis 30,0 mm, auf. Die erwähnte Stärke s_{LA} jedes Lagenabschnitts 2a₁, 2b₁ liegt fortlaufend (durchgehend) insbesondere über zumindest 50%, bevorzugt über zumindest 75%, der Breite b₁ vor, wobei die Stärke jedes Lagenabschnitts 2a₁, 2b₁ über dessen Endabschnitte von der Stärke s_{LA} zur Stärke s_{GL} zunimmt. Ferner sind die verjüngten Lagenabschnitte 2a₁, 2b₁, im Reifenquerschnitt betrachtet, bevorzugt derart angeordnet, dass diese die Reifenäquatorialebene (Linie A-A) queren und/oder symmetrisch zur Reifenäquatorialebene (Linie A-A) ausgebildet sind.

Die verjüngten Lagenabschnitte 2a₁, 2b₁ und damit der verjüngte Gürtelabschnitt 2₁ sind bzw. ist bedingt durch die elektrische Leitfähigkeit der Stahlfestigkeitsträger 2c und durch die geringen Stärken s_{LA} der Lagenabschnitte 2a₁, 2b₁ elektrisch leitend.

Die Gürtelbandage 3 bedeckt die radial äußere Gürtellage 2b radial außen, verläuft in axialer Richtung über die Gürtelkanten 2k beider Gürtellagen 2a, 2b hinaus (Fig. 1) und besteht aus in einer Bandagegummierung eingebetteten, im Allgemeinen textilen, vorzugsweise aus Nylon, Polyethylenterephthalat, Polyamid oder Aramid gefertigten, Festigkeitsträgern 3a (Fig. 2), welche insbesondere Korde sind. Die Gürtelbandage 3 ist derart elektrisch leitend ausgeführt, dass sie eine elektrisch leitende Verbindung zwischen dem bzw. den Laufstreifenelemente(n) 1e und dem verjüngten Gürtelabschnitt 2₁, genauer dem verjüngten Lagenabschnitt 2a₁, sicherstellt. Die Bandagegummierung kann aus elektrisch leitendem Gummimaterial bestehen. Alternativ weist die Gürtelbandage 3 eine Bandagegummierung aus elektrisch nicht leitendem Gummimaterial auf, wobei durch benachbarte Windungen der Gürtelbandage 3 zumindest eine elektrisch leitende Passage, beispielsweise in Form von elektrisch leitenden Fäden, einem elektrisch leitenden Gummistreifen, einer elektrisch leitenden einvulkanisierten Schicht oder dergleichen durchgeführt ist. Die elektrisch leitende(n) Passage(n) steht bzw. stehen in Kontakt mit dem bzw. den elektrisch leitenden Laufstreifenelemente(n) 1e und dem verjüngten Gürtelabschnitt 2₁, also dem verjüngten Lagenabschnitt 2b₁.

In Folge des verjüngten Gürtelabschnitts 2₁ weist die Gürtelbandage 3 einen über die Breite b₁ des Gürtelabschnitts 2₁ muldenartig verlaufenden Bandageabschnitt 3₁ auf, welcher gegenüber der sonstigen Gürtelbandage 3 geringfügig radial nach innen versetzt ist. Die durch den muldenartig verlaufenden Bandageabschnitt 3₁ mitgebildete Mulde ist vom Gummimaterial des Laufstreifens 1, beim Ausführungsbeispiel vom Gummimaterial der radial inneren Laufstreifenschicht 1b, ausgefüllt.

Wie Fig. 1 ferner zeigt, ragen die Seitenwände 6 unter die Randabschnitte 2a₂ der radial inneren Gürtellage 2a hinein, sodass jede Seitenwand 6 einen zwischen dem jeweiligen Randabschnitt 2a₂ und der Karkasseinlage 4 auslaufenden, radial äußeren Wandabschnitt 6₁ aufweist. Ein Fahrzeugreifen, dessen Seitenwände 6 solche Wandabschnitte 6₁ aufweisen, wird als Fahrzeugreifen mit "SUB-Konstruktion" bezeichnet, wobei SUB für "sidewall under belt" steht. Die Seitenwände 6 bestehen aus elektrisch nicht leitendem Gummimaterial.

Die Innenschicht 5 besteht aus einem elektrisch nicht leitenden Gummimaterial und ist in an sich bekannter Weise ausgeführt.

Die Hornprofile 7 bestehen aus einem elektrisch leitenden Gummimaterial, sind in an sich bekannter Weise gestaltet und kontaktieren die Karkasseinlage 4.

Die beim Fahren auftretenden elektrostatischen Aufladungen werden vom Fahrzeug, insbesondere von der Karosserie, zum jeweiligen Untergrund ("Erdung") über einen "Ableitweg", welcher beim Ausführungsbeispiel von der Felge, dem Hornprofil 7, der Karkasseinlage 4, dem verjüngten Gürtelabschnitt 2₁, der Gürtelbandage 3 und dem bzw. den elektrisch leitenden Laufstreifenelement(en) 1e gebildet ist, abgeleitet.

### 2. Zweites Ausführungsbeispiel eines Fahrzeugreifens

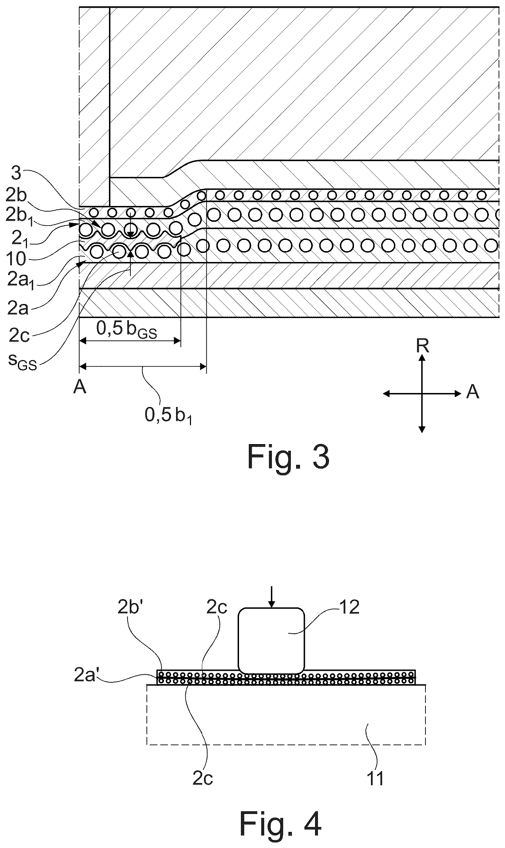

Fig. 3 zeigt eine zu Fig. 2 analoge Darstellung gemäß einem zweiten Ausführungsbeispiel.

Der in Fig. 3 gezeigte Fahrzeugreifen unterscheidet sich von aus Fig. 1 und Fig. 2 dadurch, dass im Bereich des verjüngten Gürtelabschnitts 2₁ zwischen dem verjüngten Lagenabschnitt 2a₁ der radial inneren Gürtellage 2a und dem verjüngten Lagenabschnitt 2b₁ der radial äußeren Gürtellage 2b ein vorzugsweise in Umfangsrichtung umlaufender, elektrisch leitender Gummistreifen 10 verbaut ist, welcher, im Reifenquerschnitt betrachtet, in radialer Richtung an seiner stärksten Stelle eine Stärke s_{GS} von 0,50 mm bis 1,00 mm und in axialer Richtung (Doppelpfeil A) eine Breite b_{GS} von 50% bis 100%, insbesondere von höchstens 75%, der Breite b₁ des verjüngten Gürtelabschnitts 2₁ aufweist. Der Gummistreifen 10 ragt in die Bereiche zwischen benachbarte Stahlfestigkeitsträger 2c hinein und kann die Stahlfestigkeitsträger 2c kontaktieren.

### 3. Verfahren zum Aufbauen eines Gürtel-Laufstreifen-Pakets zur Bildung eines Rohreifens gemäß einer ersten Variante

Nachfolgend wird auf Verfahren zum Aufbauen eines Rohreifens, welcher mit den erläuterten Fahrzeugreifen (Fig. 1, Fig. 2 bzw. Fig. 3) korrespondiert, eingegangen. Der aufgebaute Rohreifen wird in bekannter Weise in einer Vulkanisationsform vulkanisiert und derart der fertige Fahrzeugreifen erhalten. Fig. 4 zeigt einen schematischen Querschnitt durch einen Abschnitt einer in insbesondere bekannter Weise ausgeführten Gürtelaufbautrommel 11 mit einer horizontal im Raum verlaufenden Trommelachse, um welche die Gürtelaufbautrommel 11 rotierbar ist.

Zum Aufbauen des Rohreifens für den in Fig. 1 und Fig. 2 gezeigten Fahrzeugreifen wird auf der Gürtelbaubautrommel 11 (Fig. 4) ein Gürtel-Laufstreifen-Paket erstellt. Wie in Fig. 4 angedeutet ist, wird auf der Gürtelaufbautrommel 11 eine abgelängte erste Festigkeitsträgerlage 2a' und auf diese eine abgelängte zweite Festigkeitsträgerlage 2b'aufgewickelt, wobei die Festigkeitsträgerlage 2a', 2b' jeweils aus in einer Kautschukmischung eingebetteten Stahlfestigkeitsträgern 2c bestehen. Die abgelängte erste Festigkeitsträgerlage 2a' bildet im Fahrzeugreifen die radial innere Gürtellage 2a und die abgelängte zweite Festigkeitsträgerlage 2b' bildet im Fahrzeugreifen die radial äußere Gürtellage 2b. Anschließend werden die aufgewickelten Festigkeitsträgerlagen 2a', 2b' von außen mit einer frei drehbar gelagerten Rolle 12 (schematisch andeutet) mit einer in Richtung Trommelachse (angedeutet durch einen Pfeil) gerichteten Kraft von zumindest 20 N, insbesondere von 30 N bis 100 N, bevorzugt von bis zu 90 N, besonders bevorzugt von 40 N bis 80 N, beaufschlagt und die Gürtelaufbautrommel 11 - unter Aufrechterhaltung der Kraft - um ihre Trommelachse in Rotation versetzt, wobei zumindest eine, bevorzugt genau eine, komplette Umdrehung (360°-Drehung) der Gürtelaufbautrommel 11 durchgeführt wird, wodurch die Festigkeitsträgerlagen 2a', 2b' lokal verjüngt und in Richtung Trommelachse lokal muldenförmige verformt, also eingedrückt, werden.

Bei diesem Schritt kann die bereits erwähnte, einen "unrunden" Querschnitt der Stahlfestigkeitsträger 2c zur Folge habende Deformation der Stahlfestigkeitsträger 2c auftreten.

Die Rolle 12 wird von der Gürtelaufbautrommel 11 wegbewegt und es wird anschließend ein Festigkeitsträgerstreifen aus in einer Kautschukmischung eingebetteten textilen Festigkeitsträgern aufgewickelt, welcher im vulkanisierten Reifen die Gürtelbandage 3 bildet (nicht gezeigt). Die konkrete Ausgestaltung des Festigkeitsträgerstreifens ist von der jeweils vorgesehenen Ausführung der Gürtelbandage 3 abhängig. Ist eine Bandagegummierung aus elektrisch leitendem Gummimaterial vorgesehen, ist die Kautschukmischung des Festigkeitsträgerstreifens entsprechend auszulegen, wobei ansonsten keine weiteren Maßnahmen erforderlich sind. Ist jedoch eine Bandagegummierung aus elektrisch nicht leitendem Gummimaterial vorgesehen, ist mittelts geeigneter Maßnahmen, beispielsweise durch zumindest abschnittsweises Umwickeln des Festigkeitsträgerstreifens mit elektrisch leitenden Fäden, für die Bildung der erwähnten elektrisch leitenden Passage zu sorgen. Im Anschluss wird ein Rohlaufstreifen auf die Festigkeitsträgerlagen 2a', 2b' und die Festigkeitsträgerstreifen aufgewickelt und derart das Gürtel-Laufstreifen-Paket fertiggestellt. Der weitere Aufbau des Rohreifens erfolgt in insbesondere bekannter Weise.

Zum Aufbauen des Rohreifens für den in Fig. 3 gezeigten Fahrzeugreifen wird unmittelbar nach dem Aufwickeln der abgelängten ersten Festigkeitsträgerlage 2a' mittig auf diese ein abgelängter Kautschukmischungsstreifen mit einer Stärke von 0,50 mm bis 1,00 mm zur Bildung des elektrisch leitenden Gummistreifens 10 aufgewickelt. Anschließend wird die abgelängte zweite Festigkeitsträgerlage 2b' aufgewickelt und auf übereinstimmende Weise wie beim Verfahren zum Aufbauen des Rohreifens für den in Fig. 1 und Fig. 2 gezeigten Fahrzeugreifen vorgegangen.

### 4. Verfahren zum Aufbauen eines Gürtel-Laufstreifen-Pakets zur Bildung eines Rohreifens gemäß einer zweiten Variante

Die zweite Variante unterscheidet sich von der ersten Variante dadurch, dass keine Rolle 12 eingesetzt wird, sondern zur Bildung der Gürtelbandage ein unter einer Zugkraft von zumindest 20N stehender Festigkeitsträgerstreifen aus in einer Kautschukmischung eingebetteten textilen Festigkeitsträgern aufgewickelt wird, wodurch das lokale muldenförmige Verformen unter Verjüngen der zuvor aufgewickelten Festigkeitsträgerlagen direkt bei diesem Aufwickelschritt miterfolgt.

Die Erfindung ist auf das beschriebene Ausführungsbeispiele nicht beschränkt.

Der Gürtelverband 2 weist zumindest einen mittleren, also zu den Gürtelkanten 2k beabstandeten, verjüngten Gürtelabschnitt auf. Es können auch mehrere, insbesondere bis zu drei, solcher Gürtelabschnitte vorgesehen sein.

Bei den beschriebenen Ausführungsbeispielen bildet die Karkasseinlage 7 mit der elektrisch leitenden Karkassgummierung gemeinsam mit dem jeweiligen Hornprofil 9 aus elektrisch leitendem Gummimaterial im Bereich jeder Seitenwand 4 eine elektrisch leitende Gürtel-Felgen-Verbindung, welche bei auf der Felge montierten Fahrzeugreifen den elektrisch leitenden, verjüngten Gürtelabschnitt 2₁ mit der Felge verbindet. Die elektrisch leitende Gürtel-Felgen-Verbindung kann auch ohne elektrisch leitende Karkassgummierung und/oder ohne elektrisch leitendes Hornprofil realisiert werden, beispielsweise durch elektrisch leitende Fäden, welche auf der Karkasseinlage und/oder auf der Innenseite der Seitenwand und des Hornprofils aufgebracht sind, wie es beispielsweise aus der DE 10 2010 017 444 A1 bzw. der WO 2017/088994 A1 bekannt ist. Teil dieser elektrisch leitenden Verbindung kann auch eine im Zuge des Reifenaufbaus aufgebrachte, elektrisch leitenden Suspension sein, wie sie etwa in der EP 3 103 661 B1 beschrieben ist. Anstelle eines elektrisch leitenden Hornprofils ist es beispielsweise möglich, an der Außenseite eines elektrisch nicht leitenden Hornprofils elektrisch leitendes Material vorzusehen, so wie es beispielsweise aus der DE 10 2015 225 150 A1 bekannt ist. Das elektrisch leitende Material ist dabei insbesondere ein Gummistreifen, ein Gewebe, ein Faden, eine aufgebrachte elektrisch leitende Paste bzw. eine leitende Suspension oder ein aufgebrachtes elektrisch leitendes Pulver oder Granulat.

Der verjüngten Gürtelabschnitt 2₁ läuft vorzugsweise über den kompletten Reifenumfang. Alternativ kann der verjüngten Gürtelabschnitt 2₁ auch nur über einen Abschnitt des Reifenumfangs vorgesehen sein, wobei dieser Abschnitt vorzugsweise eine Umfangslänge von zumindest 30,0 mm aufweist.

Der Laufstreifen kann einschichtig ausgeführt sein oder mehr als zwei Laufstreifenschichten aufweisen.

Bei einer als Spulbandage ausgeführten Gürtelbandage verlaufen die elektrisch leitenden Fäden vorzugsweise gemäß der DE 10 2015 225 601 A1, sodass die Fäden auf der Innenseite des bzw. eines Bandagestreifens verlaufende Fadenabschnitte, auf der Außenseite des bzw. eines Bandagestreifens verlaufende Fadenabschnitte und zwischen benachbarten Windungen verlaufende, die Gürtelbandage in radialer Richtung durchsetzende Fadenabschnitte aufweisen. Der bzw. die Bandagestreifen kann bzw. können insbesondere auch mit den Fäden umwickelt sein. Die elektrische Leitfähigkeit durch die Gürtelbandage hindurch kann ferner mit einer elektrisch leitenden Suspension, wie sie etwa in der EP 3 103 661 B1 beschrieben ist, sichergestellt werden. Die elektrisch leitende Suspension wird dabei auf einen Festigkeitsträger enthaltenen Kautschukmischungsstreifen aufgebracht.

Die Gürtelbandage ist optional und kann in radialer Richtung mehrere Lagen, insbesondere zwei Lagen, aufweisen. Ist keine Gürtelbandage vorgesehen, entfällt beim Verfahren zum Aufbauen eines Gürtel-Laufstreifen-Pakets dementsprechend das Aufwickeln des Festigkeitsträgerstreifens aus in einer Kautschukmischung eingebetteten textilen Festigkeitsträgern.

Es ist daher möglich, das Gummimaterial des Laufstreifens bzw. der Laufstreifenschichten, die Bandagegummierung, die Gürtelgummierung, die Karkassgummierung, das Gummimaterial der Seitenwände und das Gummimaterial der Hornprofile elektrisch nicht leitend auszuführen. Die diesen Gummimaterialien zugrundeliegenden Kautschukmischungen können daher vorteilhafterweise einen hohen Anteil an Kieselsäure als Füllstoff weisen, wodurch der Rollwiderstand des Reifens deutlich reduziert wird.

Der beschriebene Ableitweg verläuft zumindest über den Bereich einer der Seitenwände 6.

Im Rahmen der gegenständlichen Erfindung wird unter einem elektrisch leitenden Bestandteil des Reifens, beispielsweise dem elektrisch leitenden Laufstreifenelement 1e und einer elektrisch leitenden Verbindung, ein solcher bzw. ein solches bzw. eine solche verstanden, welcher bzw. welches bzw. welche einen spezifischen elektrischen Widerstand von ≤ 10⁸ Ohm cm aufweist.

### Bezugszeichenliste

- 1: Laufstreifen
- 1a: radial äußere Laufstreifenschicht
- 1b: radial innere Laufstreifenschicht
- 1c: Laufstreifenaußenfläche
- 1d: Laufstreifen innenseite
- 1e: elektrisch leitendes Laufstreifenelement
- 2: Gürtelverband
- 2₁: verjüngter Gürtelabschnitt
- 2a: radial innere Gürtellage
- 2a₁: verjüngter Lagenabschnitt
- 2a₂: Randabschnitt
- 2a': erste Festigkeitsträgerlage
- 2b: radial äußere Gürtellage
- 2b₁: verjüngter Lagenabschnitt
- 2b': zweite Festigkeitsträgerlage
- 2c: Stahlfestigkeitsträger
- 2k: Gürtelkante
- 3: Gürtelbandage
- 3₁: Bandageabschnitt
- 4: Karkasseinlage
- 4a: Karkasshochschlag
- 5: Innenschicht
- 6: Seitenwand
- 6₁: radial äußerer Wandabschnitt
- 7: Hornprofil
- 8: Wulstkern
- 9: Kernreiter
- 10: Gummistreifen
- 11: Gürtelaufbautrommel
- 12: Rolle
- A: Doppelpfeil (axiale Richtung)
- b₁, b_{GS}: Breite
- d₁: Durchmesser
- R: Doppelpfeil (radiale Richtung)
- s_{GL}, s_{GS}, s_{LA}: Stärke
- Z₂: Detail

## Patentansprüche

1. Fahrzeugreifen mit einem eine Bodenaufstandsfläche aufweisenden Laufstreifen (1) und einem Gürtelverband (2) mit zumindest zwei Gürtellagen (2a, 2b), jeweils aus in einer elektrisch nicht leitenden Gürtelgummierung eingebetteten Stahlfestigkeitsträgern (2c) mit einem in radialer Richtung an ihrer dicksten Stelle ermittelten Durchmesser (d₁) und gegebenenfalls mit einer Gürtelbandage (3), wobei der Fahrzeugreifen einen Ableitweg zur Ableitung elektrostatischer Aufladungen zur Laufstreifenaußenfläche (1a) aufweist, welcher den Laufstreifen oder ein den Laufstreifen (1) zur Bodenaufstandsfläche durchsetzendes elektrisch leitendes Laufstreifenelement (1e) und jeweils eine elektrisch leitende Gürtel-Felgen-Verbindung (4, 7) umfasst, welche bei auf der Felge montierten Fahrzeugreifen die Felge kontaktiert,
wobei unter einem elektrisch leitenden Bestandteil des Reifens, beispielsweise dem elektrisch leitenden Laufstreifenelement (1e) und einer elektrisch leitenden Verbindung, ein solcher bzw. ein solches bzw. eine solche verstanden wird, welcher bzw. welche bzw. welches einen spezifischen elektrischen Widerstand von ≤ 10⁸ Ohm cm aufweist,
**dadurch gekennzeichnet,**
**dass** der Gürtelverband (2) zumindest einen mittleren, in Richtung Reifeninnenraum muldenförmig geformten und gegenüber dem sonstigen Gürtelverband (2) in radialer Richtung verjüngten Gürtelabschnitt (2₁) aufweist, welcher aus in radialer Richtung übereinander angeordneten, in radialer Richtung verjüngten Lagenabschnitten (2a₁, 2b₁) der Gürtellagen (2a, 2b) gebildet ist, wobei die verjüngten Lagenabschnitte (2a₁, 2b₁) an ihrer bzw. ihren schmälsten Stelle(n) in radialer Richtung jeweils eine Stärke (s_{LA}) aufweisen, welche höchstens 0,70 mm größer ist als der Durchmesser (d₁) des in dieser Gürtellage (2a, 2b) enthaltenen Stahlfestigkeitsträgers (2c), wobei der zum Ableitweg gehörende Laufstreifen bzw. das zum Ableitweg gehörende elektrisch leitende Laufstreifenelement (1e) jeweils mit der elektrisch leitenden Gürtel-Felgen-Verbindung (4, 7) über den verjüngten Gürtelabschnitt (2₁) elektrisch leitend miteinander verbunden sind.

2. Fahrzeugreifen nach Anspruch 1, **dadurch gekennzeichnet, dass** die Stärke (s_{LA}) der verjüngten Lagenabschnitte (2a₁, 2b₁), welche an der bzw. den schmälsten Stelle(n) vorliegt, 0,10 mm bis 0,50 mm größer ist als der Durchmesser (d₁) des in dieser Gürtellage (2a, 2b) enthaltenen Stahlfestigkeitsträgers (2c).

3. Fahrzeugreifen nach Anspruch 1 oder 2, **dadurch gekennzeichnet, dass** die Stärke (s_{LA}) der verjüngten Lagenabschnitte (2a₁, 2b₁), welche an der bzw. den schmälsten Stelle(n) vorliegt, höchstens 90%, insbesondere höchstens 80%, bevorzugt höchstens 70%, der in radialer Richtung an der bzw. den schmälsten Stelle(n) ermittelten Stärke (s_{GL}) der zugehörigen Gürtellage (2a, 2b) im Bereich außerhalb des verjüngten Lagenabschnitts (2a₁, 2b₁) beträgt.

4. Fahrzeugreifen nach einem der Ansprüche 1 bis 3, **dadurch gekennzeichnet, dass** die verjüngten Lagenabschnitte (2a₁, 2b₁), im Reifenquerschnitt betrachtet, in axialer Richtung eine Breite (b₁) von 5,0 mm bis 50,0 mm, insbesondere von 10,0 mm bis 40,0 mm, bevorzugt von 15,0 mm bis 30,0 mm, aufweisen, wobei die Stärke (s_{LA}) der verjüngten Lagenabschnitte (2a₁, 2b₁), welche an der bzw. den schmälsten Stelle(n) vorliegt, fortlaufend insbesondere über zumindest 50%, bevorzugt über zumindest 75%, der Breite (b₁) der verjüngten Lagenabschnitte (2a₁, 2b₁) vorliegt und wobei die Stärke der Lagenabschnitte (2a₁, 2b₁) über deren Endabschnitte zur Stärke (s_{GL}), welche die zugehörige Gürtellage (2a, 2b) in radialer Richtung an der bzw. den schmälsten Stelle(n) im Bereich außerhalb des verjüngten Lagenabschnitts (2a₁, 2b₁) aufweist, fortlaufend zunimmt.

5. Fahrzeugreifen nach einem der Ansprüche 1 bis 4, **dadurch gekennzeichnet, dass** die verjüngten Lagenabschnitte (2a₁, 2b₁), im Reifenquerschnitt betrachtet, die Reifenäquatorialebene (Linie A-A) queren und bevorzugt symmetrisch zur Reifenäquatorialebene (Linie A-A) ausgebildet sind.

6. Fahrzeugreifen nach einem der Ansprüche 1 bis 5, **dadurch gekennzeichnet, dass** der Durchmesser (d₁) der Stahlfestigkeitsträger (2c) 0,3 mm bis 1,5 mm beträgt.

7. Fahrzeugreifen nach einem der Ansprüche 1 bis 6, **dadurch gekennzeichnet, dass** die verjüngten Lagenabschnitte (2a₁, 2b₁) über den kompletten Reifenumfang verlaufen.

8. Fahrzeugreifen nach einem der Ansprüche 1 bis 7, **dadurch gekennzeichnet, dass** die verjüngten Lagenabschnitte (2a₁, 2b₁) der Gürtellagen (2a, 2b) einander über ihre komplette Umfangserstreckung kontaktieren.

9. Fahrzeugreifen nach einem der Ansprüche 1 bis 7, **dadurch gekennzeichnet, dass** zwischen dem verjüngten Lagenabschnitt (2a₁, 2b₁) der einen Gürtellage (2a, 2b) und dem verjüngten Lagenabschnitt (2a₁, 2b₁) der anderen Gürtellage (2a, 2b) zumindest ein elektrisch leitender Gummistreifen (10), vorzugsweise ein einziger über die komplette Umfangserstreckung der verjüngten Lagenabschnitte (2a₁, 2b₁) verlaufender, elektrisch leitender Gummistreifen (10) verbaut ist, welcher, im Reifenquerschnitt betrachtet, in radialer Richtung eine Stärke (s_{GS}) von 0,50 mm bis 1,00 mm aufweist.

10. Fahrzeugreifen nach Anspruch 4 und 9, **dadurch gekennzeichnet, dass** der elektrisch leitende Gummistreifen (10) in axialer Richtung (Doppelpfeil A) eine Breite (b_{GS}) von 50% bis 100%, insbesondere von höchstens 75%, der Breite (b₁) des verjüngten Gürtelabschnitts (2₁) aufweist.

11. Fahrzeugreifen nach Anspruch 10, **dadurch gekennzeichnet, dass** der elektrisch leitende Gummistreifen (10) bei jedem verjüngten Lagenabschnitt (2a₁, 2b₁) in die Bereiche zwischen benachbarte Stahlfestigkeitsträger (2c) hineinragt und die Stahlfestigkeitsträger (2c) vorzugsweise kontaktiert.

12. Verfahren zum Aufbauen eines Gürtel-Laufstreifen-Pakets zur Bildung eines Rohreifens für einen Fahrzeugreifen nach einem der Ansprüche 1 bis 11 mit folgenden nacheinander ablaufenden Schritten:
a) Aufwickeln einer ersten Festigkeitsträgerlage (2a') aus in einer Kautschukmischung eingebetteten Stahlfestigkeitsträgern (2c) auf einer Gürtelaufbautrommel (11),
b) Aufwickeln einer zweiten Festigkeitsträgerlage (2b') aus in einer Kautschukmischung eingebetteten Stahlfestigkeitsträgern (2c),
c) Lokales muldenförmiges Verformen unter Verjüngen der aufgewickelten Festigkeitsträgerlagen (2a', 2b')
c1) entweder durch Beaufschlagen mit einer frei drehbar gelagerten Rolle (12) mit einer in Richtung Trommelachse der Gürtelaufbautrommel (11) gerichteten Kraft von zumindest 20 N und unter Aufrechterhaltung der Kraft Rotation der Gürtelaufbautrommel (11) um ihre Trommelachse um zumindest eine komplette Umdrehung,
c2) oder durch Aufwickeln eines unter einer Zugkraft von zumindest 20 N stehenden Festigkeitsträgerstreifens aus in einer Kautschukmischung eingebetteten textilen Festigkeitsträgern,
d) Aufwickeln eines Rohlaufstreifens auf die Festigkeitsträgerlagen (2a', 2b') und den gegebenenfalls aufgewickelten Festigkeitsträgerstreifen und derart Bilden des Gürtel-Laufstreifen-Pakets.

13. Verfahren nach Anspruch 12, **dadurch gekennzeichnet, dass** in Schritt c) die Kraft 30 N bis 100 N, bevorzugt bis zu 90 N, besonders bevorzugt 40 N bis 80 N, beträgt.

14. Verfahren nach Anspruch 12 oder 13, **dadurch gekennzeichnet, dass** in Schritt c) genau eine komplette Umdrehung durchgeführt wird.

15. Verfahren nach einem der Ansprüche 12 bis 14, **dadurch gekennzeichnet, dass** zwischen Schritt a) und Schritt b) auf die erste Festigkeitsträgerlage (2a'), insbesondere mittig, ein abgelängter Kautschukmischungsstreifen mit einer Stärke von insbesondere 0,50 mm bis 1,00 mm zur Bildung eines elektrisch leitenden Gummistreifens (10) aufgewickelt wird.
